# EUROPÄISCHE PATENTANMELDUNG

(11) **EP 1 790 981 A1**
(43) Veröffentlichungstag der Anmeldung: **30.05.2007**
(21) Anmeldenummer: 05025907.6
(22) Anmeldetag: 28.11.2005
(51) Int. Cl.: G01N 27/416

(54) **Vorrichtung und Verfahren zum Warten einer Einrichtung in einem Strömungskanal**

(71) Anmelder: SIEMENS AKTIENGESELLSCHAFT, 80333 München (DE)
(72) Erfinder: Brückner, Uwe, 90518 Altdorf (DE); Riesen, Ingo, 91207 Lauf a. d. Pegnitz (DE)

(57) **Zusammenfassung**

Die Erfindung betrifft eine Vorrichtung und ein Verfahren zum Warten einer Einrichtung (3, 11, 13). Die Vorrichtung weist einen Strömungskanal (1) mit einem Wandabschnitt (5) auf, in dem mindestens eine nach einer bestimmten Betriebsdauer zu überarbeitende in den Strömungskanal (1) hineinragende Einrichtung (3, 11, 13) angeordnet ist. Ein zu dem Wandabschnitt (5) hin offener Behälter (7) ist relativ zu dem Wandabschnitt (5) derart beweglich angeordnet, dass er in einer offenen Stellung von der Einrichtung (3, 11, 13) entfernt angeordnet ist und in einer zweiten Stellung zusammen mit dem Wandabschnitt (5) ein abgeschlossenes, von dem übrigen Strömungskanal (1) abgetrenntes Volumen bildet, in welchem die Wartung der Einrichtung (3, 11, 13) durchgeführt wird.

## Beschreibung

Die Messung eines Wertes in einer Suspension mittels einer Messeinrichtung führt durch Festsetzen des Feststoffes an der Messvorrichtung zu deren Verschmutzung. Beispielsweise ist die Messung eines pH-Wertes einer Kalkmilchsuspension einer Rauchgasreinigung durch den hohen Feststoffgehalt ganz besonders der Verschmutzung ausgesetzt. Um zu spülen und zu kalibrieren, ist die pH-Elektrode vom Prozessmedium zu trennen.

Herkömmliche Systeme arbeiten extern im Bypass, was aufwendig und teuer ist, oder eingebaut im Prozess, wobei die Elektrode mechanisch aus dem Prozess zurückgezogen wird, um sie zu spülen und zu kalibrieren. Aufgrund der Feststoffbestandteile wie z. B. Sand, die in der Kalkmilch immer enthalten sind, werden die metallischen Flächen der Armatur stark beansprucht und blockieren oft. Eine automatische Wartung durch Reinigung/Kalibrierung ist dann nicht mehr möglich.

Aufgabe der vorliegenden Erfindung ist es daher, eine Vorrichtung anzugeben, die eine automatische Wartung einer Einrichtung ermöglicht.

Diese Aufgabe wird durch die Vorrichtung nach Anspruch 1 gelöst.

Eine weitere Aufgabe der Erfindung ist es, ein Verfahren anzugeben, das eine automatische Wartung einer Einrichtung ermöglicht.

Diese Aufgabe wird durch das Verfahren nach Anspruch 11 gelöst.

Die erfindungsgemäße Vorrichtung weist einen Strömungskanal mit einem Wandabschnitt und einen realtiv zu dem Wandabschnitt beweglichen Behälter auf, der zum Wandabschnitt hin offen ist. Mindestens eine Einrichtung kann im Wandabschnitt in fester Weise anbracht werden. Der Behälter ist derart beweglich angeordnet, dass er in einer ersten Position mit dem Wandabschnitt ein abgeschlossenes Volumen bildet, während er in einer zweiten Position von dem Wandabschnitt derart beabstandet angeordnet ist, dass er mit dem Wandabschnitt kein abgeschlossenes Volumen bildet. Durch die erfindungsgemäße Vorrichtung kann der Wandabschnitt sowie an ihm angeordnete Einrichtungen gegen seine Umgebung abgedichtet werden.

In einer bevorzugten Ausführungsform ist die mindestens eine Einrichtung eine Elektrode, besonders bevorzugt eine pH-Elektrode.

In einer weiteren Ausgestaltung der Erfindung kann die mindestens eine Einrichtung weiterhin mindestens ein Anschluss für ein Spül- und/oder Kalibriermediumeintritt und -austritt sein.

Vorzugsweise ist mindestes ein Absaugventil in dem Wandabschnitt angeordnet. Durch das Absaugventil können in dem von dem Behälter und dem Wandabschnitt gebildeten Volumen enthaltene Gase, Flüssigkeiten und Feststoffe abgesaugt werden, sodass eine an dem Wandabschnitt angeordnete Einrichtung vorgereinigt werden kann.

In einer weiteren bevorzugten Ausführungsform der Erfindung kann mindestens ein Anschluss für ein Spül- und/oder Kalibriermediumeintritt und -austritt in dem Behälter angeordnet sein. Dadurch wird eine Spülung und gegebenenfalls eine Kalibrierung der Einrichtung ermöglicht.

Vorteilhaft ist mindestes ein Absaugventil in dem Behälter angeordnet. Dadurch können beispielsweise während der Wartung der Einrichtung nach ihrer Spülung und vor ihrer Rückführung in den Prozess an der Einrichtung haftende Spülmittelrückstände entfernt werden.

Bevorzugt umfasst der mindestens eine Anschluss mindestens einen Anschluss zur Drainage, zum Spülen und/oder zum Puffern.

In einer bevorzugten Ausführungsform ist der Behälter mit einem Antrieb verbunden, der den Behälter bewegt. Der Antrieb umfasst bevorzugt einen Motor. Der Antrieb kann ein E-Motor oder ein pneumatischer Antrieb mit Druckluft oder manuell sein.

Bevorzugt ist die mindestens eine Einrichtung eine pH-Elektrode, die mit einem pH-Messgerät/Controller verbunden ist.

In einer bevorzugten Ausführungsform der Erfindung weist der Wandabschnitt eine Dichtung auf, die an den Umfang des offenen Endes des Behälters angepasst ist. Dadurch kann eine sichere Abdichtung des durch den Behälter und den Wandabschnitt gebildeten, abgeschlossenen Volumens gegenüber dem Strömungskanal und dessen Prozessmedium sichergestellt werden.

In einer weiteren Ausgestaltung der Erfindung weist der Behälter an seinem offenen Ende eine Dichtung auf.

Bei dem erfindungsgemäßen Verfahren zum Warten mindestens einer an einem Wandabschnitt des Strömungskanals angeordneten Einrichtung wird dem Wandabschnitt mit der zu wartenden Einrichtung ein im Inneren des Strömungskanal beweglich angeordneter Behälter übergestülpt, sodass der Behälter zusammen mit dem Wandabschnitt ein abgeschlossenes Volumen bildet, und die Wartung in dem abgeschlossenen Volumen erfolgt.

In einer bevorzugten Ausführungsform umfasst das erfindungsgemäße Verfahren weiterhin ein Spülen der mindestens einen Einrichtung. Dadurch können fest anhaftende, die Funktion der Messelektrode störende Partikel von Einrichtungen entfernt werden.

Bevorzugt weist das erfindungsgemäße Verfahren weiterhin ein Kalibrieren der Einrichtung auf. Beispielsweise kann eine pH-Elektrode vor ihrem weiteren Einsatz kalibriert werden.

Weiterhin kann das Verfahren gemäß der Erfindung ein Evakuieren des sich durch die Anordnung des Behälters auf dem Wandabschnitt gebildeten, abgeschlossenen Volumens umfassen. Durch diesen Schritt kann ein Prozess-, Spül- und/oder Kalibriermedium von dem Wandabschnitt sowie der mindestens einen Einrichtung entfernt werden. Vor der Rückführung der Einrichtung in den Prozess kann somit an dem Wandabschnitt und einer Einrichtung anhaftendes Spül- und/oder Kalibriermedium und dergleichen entfernt werden, sodass in den Prozess keine Verunreinigungen eingebracht werden. Andererseits kann durch Evakuierung des sich durch die Anordnung des Behälters auf dem Wandabschnitt gebildeten, abgeschlossenen Volumens auch Prozessmedium vor den Schritten Spülen und/oder Kalibrieren der Einrichtung entfernt werden. D.h., durch die Evakuierung des aus dem Behälter und dem Wandabschnitt gebildeten Volumens kann eine Vorreinigung der Einrichtung durchgeführt werden.

In einer weiteren Ausgestaltung weist das Verfahren ein Ausbauen der mindestens einen Einrichtung und/oder Einbauen mindestens einer Einrichtung auf. Durch die Anordnung des Behälters auf dem Wandabschnitt des Strömungskanals, an dem die Einrichtung derart angeordnet ist, dass die Einrichtung von dem Behälter und dem Wandabschnitt eingeschlossen ist, wird beispielsweise ein Austausch einer defekten Einrichtung während eines laufenden Prozesses ermöglicht. Weiterhin wird durch die Bildung des abgeschlossenen Volumens der Einbau weiterer Messeinrichtungen in den Wandabschnitt des Strömungskanals ermöglicht.

Weitere mögliche Verfahren sind pH-Bestimmung in Farbstoffsynthesen, pH-Bestimmung in der Carbonatation (Zuckerverarbeitung), pH-Bestimmung in industriellen und kommunalen Abwasseranlagen.

Bevorzugt wird das Verfahren zum Warten einer Elektrode durchgeführt. Insbesondere eignet sich das erfindungsgemäße Verfahren zum Warten einer pH-Elektrode, die zum Messen des pH-Wertes einer Kalkmilchsuspension einer Rauchgasreinigung eingesetzt wird.

Weitere Merkmale, Eigenschaften und Vorteile der vorliegenden Erfindung werden nachfolgend unter Bezugnahme auf die beiliegenden Zeichnungen anhand von Ausführungsbeispielen beschrieben.
- FIG 1: zeigt eine Ausführungsform der erfindungsgemäßen Vorrichtung, bei der eine Einrichtung in Betriebsstellung ist.
- FIG 2: zeigt eine Ausführungsform der erfindungsgemäßen Vorrichtung, bei der eine Einrichtung in Wartungsstellung ist.

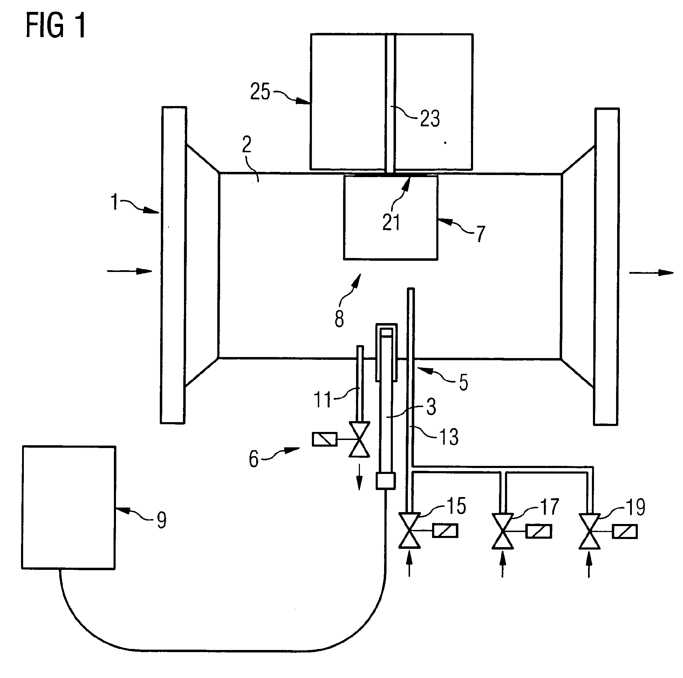

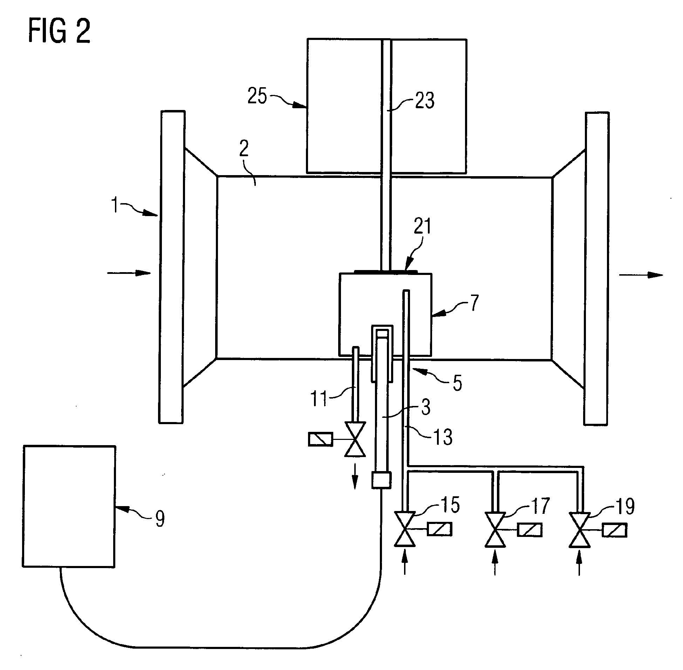

FIG 1 bzw. 2 zeigt als eine Ausführungsform der erfindungsgemäßen Vorrichtung einen Abschnitt einer Rauchgasreinigungsanlage. Diese umfasst einen Strömungskanal 1, welcher von einem Rohrabschnitt 2 der Rauchgasreinigungsanlage gebildet ist und in dem eine bewegliche Hülse 7 angeordnet ist. Diese besteht aus einem Rohr, welches ein offenes Ende 8 und ein mit einer Platte 21 verschlossenes Ende aufweist.

Die Hülse 7 ist im Inneren des Rohrabschnittes in einer Richtung senkrecht zur Axialrichtung des Rohrabschnittes 2 beweglich angeordnet und kann von einer Betriebsstellung (Fig. 1) in eine Wartestellung (Fig. 2) versetzt werden. In der Wartestellung liegt das offene Ende 8 der Hülse 7 an einem Wandabschnitt 5 des Rohrabschnittes 2 an, wobei der Wandabschnitt 5 und die Hülse 7 ein abgeschlossenes Volumen bilden. Das abgeschlossene Volumen ist dabei mittels einer zwischen dem Wandabschnitt 5 und der Hülse 7 angeordneten Dichtung gegen das im Rohrabschnitt 2 strömende Medium abgedichtet.

Am Wandabschnitt 5 ist eine Einrichtung 6 angeordnet, welche im vorliegenden Ausführungsbeispiel eine pH-Messelektrode 3, einen Drainageanschluss 11 sowie einen Zuführungsanschluss 13 mit einer Anzahl von Ventilen 15, 17, 19 umfasst. Wenn sich die Hülse 7 in der in FIG 2 gezeigten Endstellung befindet, befinden sich die Messelektrode 3, der Drainageanschluss 11 und der Zuführanschluss 13 innerhalb des abgeschlossenen und abgedichteten Volumens.

Die pH-Elektrode 3 ist mit einem pH-Messgerät/Controller 9 verbunden und dient zum Messen des pH-Wertes des Mediums im Rohrabschnitt 2. Durch den Anschluss 13 mit den Ventilen 15, 17 und 19 können ein Spülmedium sowie zwei verschiedene Pufferlösungen zum Spülen und Kalibrieren der Elektrode zugeführt werden.

Die Hülse 7 ist mittels der Platte 21 mit einer Stange 23 verbunden. Diese Anordnung ist Teil eines Antriebs 25, der einen Motor (nicht gezeigt) zum Bewegen der Stange 23 und dadurch der Hülse 7 von einer Endstellung in die andere Endstellung umfasst. Der Antrieb 25 kann ein E-Motor oder ein pneumatischer Antrieb mit Druckluft oder manuell sein.

In der in FIG 1 gezeigten Ausführungsform befindet sich die Elektrode 3 in Betriebsstellung, d.h., die Elektrode 3 misst den pH-Wert des Mediums, das durch den Strömungskanal 1 strömt.

In FIG 2 ist die gleiche Ausführungsform der erfindungsgemäßen Vorrichtung wie FIG 1 mit der Elektrode 3 in Wartungsstellung gezeigt, d.h., die bewegliche Hülse 7 ist auf dem Wandabschnitt 5, an dem die Elektrode 3 und die Anschlüsse 11 und 13 angeordnet sind, derart angeordnet, dass sie mit dem Wandabschnitt 5 ein abgeschlossenen Volumen bildet.

Durch Öffnen des Ventils 15 wird über den Anschluss 13 die Elektrode 3 gespült und von Verschmutzungen befreit. Das Spülmedium wird durch Öffnen des Anschlusses 11 aus dem von Hülse 7 und Wandabschnitt 5 gebildeten Volumen entfernt. Wenn die Spülung der Elektrode 3 abgeschlossen ist, wird sichergestellt, dass Anschluss 11 und Ventil 15 geschlossen sind. Anschließend wird die Elektrode 3 durch Öffnen des Ventils 17 einer Pufferlösung ausgesetzt, die durch Öffnen des Anschlusses 11 aus dem aus Hülse 7 und Wandabschnitt 5 gebildeten Volumen entfernt werden kann. Die Elektrode 3 wird durch Öffnen des Ventils 19 einer zweiten Pufferlösung ausgesetzt, die wiederum durch Öffnen des Anschlusses 11 aus dem Volumen entfernt werden kann. Nach Entfernung der zweiten Pufferlösung ist die Kalibrierung der Elektrode 3 abgeschlossen.

Die Hülse 7 wird durch Betätigen des Antriebs 25 bewegt und von dem Wandabschnitt 5 beabstandet angeordnet, sodass die Hülse 7 mit dem Wandabschnitt 5 kein abgeschlossenes Volumen bildet. Die Elektrode 3 befindet sich dann wieder in Betriebsstellung.

Im beschriebenen Ausführungsbeispiel ist ein Drainageanschluss 11 im Wandabschnitt 5 des Rohrabschnittes 2 angeordnet. Alternativ kann auch wenigstens eine Absaugöffnung in der Hülse 7 angeordnet sein. Die Abfuhr des abgesaugten Mediums kann dabei bspw. durch die Stange 23 erfolgen, wenn man diese hohl ausgestaltet, sodass diese ein Rohr bildet. Schließlich ist es auch möglich, dass ein Absaugen sowohl über den Drainageanschluss als auch über die Absaugöffnung erfolgt.

## Patentansprüche

1. Vorrichtung mit einem Strömungskanal (1), welcher einen Wandabschnitt (5) aufweist, in dem mindestens eine nach einer bestimmten Betriebsdauer zu überarbeitende in den Strömungskanal hineinragende Einrichtung (3, 11, 13) angeordnet ist, und in welchem ein zu dem Wandabschnitt (5) hin offener Behälter (7) derart relativ zum Wandabschnitt (5) beweglich angeordnet ist, dass er in einer ersten Stellung von der Einrichtung (3, 11, 13) entfernt angeordnet ist und in einer zweiten Stellung zusammen mit dem Wandabschnitt (5) ein abgeschlossenes, von dem übrigen Strömungskanal (1) abgetrenntes Volumen bildet.

2. Vorrichtung nach Anspruch 1,
**dadurch gekennzeichnet, dass** die mindestens eine Einrichtung (3, 11, 13) eine Elektrode (3), bevorzugt eine pH-Elekrode, ist.

3. Vorrichtung nach Anspruch 1 oder 2,
**dadurch gekennzeichnet, dass** die mindestens eine Einrichtung (3, 11, 13) weiterhin mindestens ein Anschluss (11, 13) für ein Spül- und/oder Kalibriermediumeintritt und -austritt ist.

4. Vorrichtung nach einem der Ansprüche 1 bis 3,
**dadurch gekennzeichnet, dass** mindestes ein Absaugventil in dem Wandabschnitt (5) angeordnet ist.

5. Vorrichtung nach einem der Ansprüche 1 bis 4,
**dadurch gekennzeichnet, dass** mindestens ein Anschluss für ein Spül- und/oder Kalibriermediumeintritt und -austritt und/oder mindestens ein Absaugventil in dem Behälter (7) angeordnet ist.

6. Vorrichtung nach Anspruch 3 oder 5,
**dadurch gekenneichnet, dass** der mindestens eine Anschluss (11, 13) mindestens einen Anschluss (11, 13) zur Drainage, zum Spülen und/oder zum Puffern umfasst.

7. Vorrichtung nach einem der Ansprüche 1 bis 6,
**dadurch gekennzeichnet, dass** der Behälter (7) mit einem Antrieb (25) verbunden ist.

8. Vorrichtung nach einem der Ansprüche 2 bis 7,
**dadurch gekennzeichnet, dass** die pH-Elektrode (3) mit einem pH-Messgerät/Controller (9) verbunden ist.

9. Vorrichtung nach einem der Ansprüche 1 bis 8,
**dadurch gekennzeichnet, dass** der Wandabschnitt (5) eine Dichtung aufweist, die an den Umfang des offenen Ende des Behälters (7) angepasst ist.

10. Vorrichtung nach einem der Ansprüche 1 bis 9,
**dadurch gekennzeichnet, dass** der Behälter (7) an seinem offenen Ende eine Dichtung aufweist.

11. Verfahren zum Warten einer an dem Wandabschnitt (5) eines Strömungskanals (1) angeordneten Einrichtung (3, 11, 13), in welchem der Wandabschnitt (5) mit der zu wartenden Einrichtung (3, 11, 13) ein im Inneren des Strömungskanals (1) beweglich angeordneter Behälter (7) übergestülpt wird, sodass der Behälter (7) zusammen mit dem Wandabschnitt (5) ein abgeschlossenes Volumen bildet, und die Wartung im abgeschlossenen Volumen erfolgt.

12. Verfahren nach Anspruch 11, in dem die Wartung ein Spülen der Einrichtung (3, 11, 13) umfasst.

13. Verfahren nach Anspruch 11 oder 12, in dem die Wartung ein Kalibrieren der Einrichtung (3, 11, 13) umfasst.

14. Verfahren nach einem der Ansprüche 11 bis 13, in dem die Wartung ein Evakuieren des abgeschlossenen Volumens umfasst.

15. Verfahren nach Anspruch 11, in dem die Wartung ein Ausbauen der Einrichtung (3, 11, 13) und/oder ein Einbauen einer Einrichtung (3, 11, 13) umfasst.

16. Verfahren nach einem der Ansprüche 11 bis 15,
**dadurch gekennzeichnet, dass** die Einrichtung (3, 11, 13) eine Elektrode (3) ist.
